# EUROPÄISCHE PATENTANMELDUNG

(11) **EP 2 693 197 A1**
(43) Veröffentlichungstag der Anmeldung: **05.02.2014**
(21) Anmeldenummer: 12005575.1
(22) Anmeldetag: 31.07.2012
(51) Int. Cl.: G01N 21/31, G01N 21/47, G01N 21/84, B29C 35/08, G01N 11/00

(54) **Detektorkopf**

(71) Anmelder: QIAGEN Lake Constance GmbH, 78333 Stockach (DE)
(72) Erfinder: Feuerbacher, Elmar Christian, 78333 Stockach (DE); Heil, Michael, 78333 Stockach (DE)
(74) Vertreter: Hössle Patentanwälte Partnerschaft

(57) **Zusammenfassung**

Es werden ein Detektorkopf (30) für ein berührungsloses Messverfahren und eine Messeinrichtung mit einem solchen Detektorkopf (30) vorgestellt. Der Detektorkopf (30) weist ein Gehäuse (36) mit einem optischen Medium (60), insbesondere mit einem Fenster oder einer Linse, zum Durchleiten von Laserlicht (52) und zum Rückleiten von Licht (64) auf. Das Gehäuse (36) weist einen ersten Anschluss (50), insbesondere einen Koppler, zum Einkoppeln einer Faser für Laserlicht (52), und einen zweiten Anschluss (54), insbesondere einen Koppler, zum Auskoppeln in eine Faser für einen Messstrahl (56) auf. In dem Gehäuse (36) ist ein Strahlteiler (40, 62), insbesondere ein Lochspiegel (40) mit einem Loch (62), zum räumlich selektiven Erfassen von Streulicht (64) vorgesehen.

## Beschreibung

Die Erfindung betrifft einen Detektorkopf für ein berührungsloses Bestimmen einer Eigenschaft eines Gegenstands und eine Messeinrichtung mit einem solchen Detektorkopf.

Der Detektorkopf wird bspw. in einem Mess- bzw- Detektionsverfahren verwendet, bei dem das Streuverhalten des Gegenstands auf eine interessierende Eigenschaft des Gegenstands schließen lässt. Dabei können sowohl Oberflächeneigenschaften als auch Eigenschaften des Volumens des Gegenstands bestimmt werden. Damit sollen auch gezielt bestimmte Schichten in dem Gegenstand untersucht werden können.

Das berührungslose Bestimmen soll dabei ermöglichen, ohne negative Einwirkung auf den Gegenstand, die interessierende Eigenschaft zu bestimmen.

Der beschriebene Detektorkopf wird in einer von vielen Anwendungen zur Härtungsprüfung einer Objektbeschichtung, bspw. einer Druck- oder Lackschicht, verwendet. Die Härtungsprüfung dient dazu, um festzustellen, ob eine aufgetragene Schicht bereits ausreichend getrocknet bzw. ausgehärtet ist.

Die Bedruckung und Beschichtung von Oberflächen sind weitverbreitete Verfahren zum Schutz und zur Gestaltung von Oberflächen, insbesondere auch im industriellen Bereich. Dabei führen Umweltschutzauflagen und Qualitätsanforderungen vermehrt zum Einsatz von Einkomponenten-Systemen. Daneben ist zu berücksichtigen, dass die Forderungen an Qualität und Durchsatz von Druck- und Lackieranlagen stetig wachsen. Daraus resultieren hohe Prozessgeschwindigkeiten, die nur noch kurze Bestrahlungszeiten von wenigen Sekunden für die Trocknung bzw. Vernetzung von Farben bzw. Lacken erlauben. Dabei muss, abhängig von der Anwendung, ein Trocknungsgrad zwischen 60 % und 90 % sichergestellt werden, damit Staubeinschlüsse vermieden und Folgeprozesse, wie z. B. der nächste Farbauftrag, gestartet werden können. Bekannte eingesetzte lösemittelhaltige Farben und Lacke stoßen bei diesen Bedingungen aufgrund der unzureichenden Kontrollierbarkeit des Trocknungsprozesses und steigenden Umweltauflagen an ihre Grenzen. Stattdessen werden zunehmend lösemittelfreie, thermisch- und UV-härtende Lacke und Farben eingesetzt.

Ein weiteres Problem besteht darin, dass die Durchhärtung von Farben und Lacken nur mit hohem Aufwand kontrollierbar ist. Derzeit erfolgt die Überwachung der Trocknung bzw. Vernetzung von Farben und Lacken in industriellen Druck- und Lackierprozessen durch regelmäßige manuelle Entnahme von Proben direkt aus dem Produktionsprozess und anschlie-βende Analyse im Labor. Zur Gewährung der geforderten Oberflächenqualität müssen regelmäßig Parameter, wie bspw. der Oberflächenvernetzungsgrad, sowie die für Elastizität und Haftung der Farb- bzw. Lackschicht ausschlaggebende Tiefenhärtung manuell geprüft werden. Weitere im Labor zu untersuchende Parameter sind die Lackhärte, bspw. die sogenannte Bleistifthärte, Pendelhärte nach König, die Abriebfestigkeit nach Taber sowie die Flecken- und Lösemittelbeständigkeit.

Um manuelle Kontrollen und den Produktionsausschuss auf ein vertretbares Minimum zu reduzieren, werden daher aktuelle Prozessparameter, wie z. B. der Energieeintrag, bis zu 30 % erhöht und die Gesamtanlage bzw. der Prozess entsprechend überdimensioniert, so dass die geforderte Oberflächen- und Tiefentrocknung ohne Zwischenkontrolle sichergestellt werden kann. Weiter erfordert die Dosierung der für die Härtung in unterschiedlichen Lacktiefen zuständigen UV-A, -B und -C Anteile in Zusammenspiel mit der individuellen Auftragsdicke, Pigmentierung, Fotoinitiatoranteilen, Reflexionseigenschaften usw. der zu verarbeitenden Farb- und Lacksysteme beim Anfahren wie im laufenden Druck bzw. Lackierprozess viel Zeit und Erfahrung sowie regelmäßige manuelle Kontrollen, um Produktionsstillstände und Ausschuss zu vermeiden.

Speziell bei den in Industrieanwendungen üblichen hohen Prozessgeschwindigkeiten genügt die aktuelle, manuelle Stichprobenkontrolle der Vernetzung nicht den industriellen Anforderungen. Außerdem ist die zur Zeit praktizierte Überdimensionierung von Anlagen und Prozessen weder ökonomisch noch ökologisch sinnvoll. Es werden daher Verfahren und Sensoren gefordert, die relevante Qualitätskriterien und Produktmerkmale bereits im Fertigungsprozess kontinuierlich erfassen, überwachen und bei Bedarf einer übergeordneten Steuerung für die Korrektur bzw. Prozessoptimierung zur Verfügung stellen.

Es werden bislang Verfahren eingesetzt, bei denen einzelne Stichproben aus der Produktionslinie manuell entnommen und anschließend untersucht werden. Diese Verfahren sind zeitaufwendig und liefern subjektive, vom Prüfer beeinflussbare Ergebnisse mit eingeschränkter Reproduzierbarkeit. Die Ergebnisse erlauben ausschließlich Aussagen über die Oberflächeneigenschaften von Farb- bzw. Lackschichten. Qualitative oder quantitative Aussagen zum Umwandlungsgrad im Lackvolumen mit größeren Schichtdicken können mit dem genannten Verfahren nicht präzise gemacht werden.

Zur quantitativen Bestimmung des Umwandlungsgrads von Monomeren zu Polymeren in Farb- bzw. Lackschichten sind zeit- und kostenaufwendige, nur im Labor einsetzbare Messverfahren verfügbar. So werden die FTIR-Spektroskopie und ATR-Messung vorwiegend zur wissenschaftlichen Analyse der Vernetzung von Lackschichten bzw. Oberflächen angewandt. Die FTIR-Raman-Spektroskopie sowie die konfokale Raman-Spektroskopie sind nur an Lacken mit geringer Absorption im Messwellenlängenbereich anwendbar und erfordern intensive Laser.

Dies hat zur Folge, dass in Lackier- und Druckbetrieben die Durchhärtung von getrockneten Lack- und Farbschichten bislang ausnahmslos indirekt bestimmt wird.

Ausgehend hiervon liegt der Erfindung die Aufgabe zugrunde, einen Detektorkopf zu entwickeln, der ein berührungsloses Bestimmen einer Eigenschaft eines Gegenstands ermöglicht.

Diese Aufgabe wird gelöst durch einen Detektorkopf mit den Merkmalen des Anspruchs 1. Es wird weiterhin eine Messeinrichtung gemäß Anspruch 14 vorgestellt. Ausführungen ergeben sich aus den abhängigen Ansprüchen und der Beschreibung.

Der vorgestellte Detektorkopf weist ein Gehäuse auf, in dem ein Strahlteiler, bspw. ein Streulichtfilter oder ein Interferenzfilter, angeordnet ist, wobei zusätzlich ein erster Anschluss zum Einkoppeln einer Faser für einen Anregungsstrahl und ein zweiter Anschluss zum Auskoppeln in eine Faser für einen Messstrahl vorgesehen ist, und bei dem das Gehäuse ein optisches Medium, bspw. ein Fenster oder eine Linse, zum Durchleiten eines Anregungsstrahls und zum Rückleiten von Licht, bspw. Streulicht, das räumlich selektiv von dem Strahlteiler, bspw. dem Streulichtfilter/Oberflächenreflexfilter, zu erfassen und auf den zweiten Anschluss zu leiten bzw. auf diesen zu projizieren ist, aufweist.

Der erste Anschluss und/oder der zweite Anschluss kann bzw. können als Koppler ausgebildet sein. Diese Koppler übernehmen die mechanische Funktion des Fixierens der Faser.

Es kann bzw. können weiterhin ein erster Kollimator zum Einkoppeln des Anregungsstrahls und/oder ein zweiter Kollimator zum Auskoppeln des Messstrahls vorgesehen sein. Kollimatoren, die üblicherweise eine Linse umfassen, übernehmen die optische Funktion des Ein- bzw. Auskoppelns eines Strahls. Die Anschlüsse im Gehäuse des Detektorkopfs können somit sowohl mechanische als auch optische Aufgaben erfüllen.

Als Streulichtfilter/Oberflächenreflexfilter wird bspw. ein Lochspiegel verwendet, der mit Metall, z.B. Gold, beschichtet sein kann.

Alternativ kann als Streulichtfilter ein Spiegel verwendet werden, der von einer transmittierenden Region umgeben ist.

In einer Ausführung ist der Detektorkopf für ein Transflexionsverfahren ausgebildet.

Grundsätzlich kann der Detektorkopf für Verfahren zum berührungslosen Bestimmen einer Eigenschaft eines Gegenstands eingesetzt werden, bei dem ein Anregungsstrahl auf den Gegenstand projiziert wird und durch den Anregungsstrahl erzeugtes Licht, bspw. Streulicht, über einen Strahlteiler, bspw. Streulichtfilter, räumlich selektiv erfasst wird.

Dabei kann der Gegenstand mit einem Anregungsstrahl bei verschiedenen Wellenlängen abgetastet werden, wobei bei einer ersten Wellenlänge ein von der Eigenschaft abhängiges Nutzsignal und bei mindestens einer weiteren Wellenlänge ein von der Eigenschaft im wesentlichen unabhängiges Referenzsignal für eine Korrektur des Nutzsignals erfasst wird.

Weiterhin können zwei Referenzsignale erfasst werden, wobei mit den beiden Referenzsignalen eine Grundlinienkorrektur vorgenommen wird.

Weiterhin kann die Grundlinie als Gerade im Spektralverlauf durch die beiden Referenzsignale bestimmt und das Nutzsignal mit einem Ordinatenwert der Geraden bei der Wellenlänge des Nutzsignals korrigiert werden.

Das Verfahren kann mit einer Messeinrichtung zum berührungslosen Bestimmen einer Eigenschaft einer Schicht mit einer Kontrolleinheit zur Bereitstellung mindestens eines Anregungsstrahls und zum Auswerten von räumlich selektiv erfasstem Streulicht und mit einer Detektionseinrichtung, die den Detektorkopf umfasst, durchgeführt werden.

Die Kontrolleinheit ist dabei in Ausgestaltung zum Ausführen eines sogenannten Lock-in-Verfahrens ausgebildet und zur Modulation und Demodulation geeignet. Das Lock-in-Verfahren dient u.a. zur Reduzierung von Umwelteinflüssen.

Das Lock-in-Verfahren sieht eine Modulation, Detektion und Demodulation vor. Bei der Modulation werden eine Anzahl von modulierten Anregungssignalen erzeugt.

Hierfür kann ein Verfahren zum Bereitstellen einer Anzahl von modulierten Anregungssignalen eingesetzt werden, bei dem jedem der Anregungssignale ein periodisches Modulationssignal zugeordnet wird, wobei die Frequenzen der Modulationssignale unterschiedlich sind und keine der Frequenzen ein ganzzahliges Vielfaches einer der anderen Frequenzen ist, und bei dem mit jedem der Modulationssignale jeweils eine Quelle angeregt wird, so dass jede Quelle ein mit dem zugeordneten Modulationssignal moduliertes Anregungssignal ausgibt.

Es kann jeweils eine Amplitudenmodulation oder eine Frequenzmodulation vorgenommen werden.

Die Modulationssignale können zudem zueinander synchronisiert werden.

Die Anregungssignale können zu einem Anregungsstrahl zusammengefasst bzw. kombiniert werden.

Weiterhin kann bei der Demodulation auf bei der Modulation verwendete Größen, wie Integrationszeitraum und Modulationssignale, zurückgegriffen werden.

In einer Ausführung ist das Gehäuse des Detektorkopfs aus Aluminium gefertigt.

Es kann zusätzlich ein Spiegel zum Umlenken des Anregungsstrahls vorgesehen sein.

Weiterhin kann das Fenster als Schutzfenster ausgebildet sein. Dies bedeutet, dass das Fenster mit einem transparenten Material abgedeckt ist, das das Eindringen von Verunreinigungen in das Gehäuse verhindert.

Weiterhin kann zusätzlich eine Linse zum Sammeln des Messstrahls vor dem Auskoppeln vorgesehen sein. Diese Linse kann zusätzlich zu dem Kollimator vorgesehen sein.

Der vorgestellte Detektorkopf ist u.a. für ein sogenanntes Transflexionsverfahren geeignet. Unter einer Transflexion versteht man eine Kombination aus Reflexion und Transmission, d. h. das Licht wird erst durch die Probe transmittiert und vom Substrat reflektiert/gestreut und durchdringt die Probe zweimal, auf dem Hin- und Rückweg. Zu beachten ist, dass bei beiden Durchgängen Streulicht an der Probe und /oder am Substrat entstehen kann.

Der beschriebene Detektorkopf ist ebenso bei einer Streuung, Reflexion, Fluoreszenz, Phosphoreszenz, Absorption und Transmission einsetzbar.

Das genutzte Transflexionsmessprinzip basiert auf einem monochromatischen Lichtstrahl, der bei Durchdringen der zu analysierenden Lackschicht durch Absorption und Streuung abgeschwächt und auf einen Empfänger projiziert wird.

Wird der Detektorkopf zur Härtungsprüfung eingesetzt, so können durch Abstimmung der Wellenlänge auf charakteristische chemische Bindungen von UV- und thermisch härtenden Beschichtungen, die sich während des Trocknungsprozesses ändern, sehr präzise Aussagen aus dem Messsignal bzw. -strahl abgeleitet werden. Die Ergebnisverwertung kann in industriellen Anwendungen erfolgen.

Der vorgestellte Detektorkopf kann folglich in einem kombinierten Transmissionsreflexionsverfahren eingesetzt werden. Bei diesem als Transflexionsverfahren bezeichneten Messprinzip trifft die z. B. von einem Laser emittierte IR-Strahlung auf die zu untersuchende, vorab auf ein Substrat aufgetragene Farb- oder Lackschicht. Ein Teil der IR-Strahlung wird an der Phasengrenze Luft/Lack reflektiert. Die verbleibende IR-Strahlung durchdringt die Lackschicht, wird am Substrat reflektiert/gestreut und durchdringt auf dem Weg an die Lackoberfläche ein zweites Mal das Lackvolumen, bevor sie an der Grenzfläche Lack/Luft wieder in die Atmosphäre austritt und auf den Empfänger trifft. Auf dem Weg durch die Lackschicht wird die IR-Strahlung durch Streuung und Absorption abgeschwächt.

Die Funktionsweise wird nachstehend erläutert: Ein für die Vernetzung von UV-Lacken, wie z.B. Acrylatlacken, charakteristisches Merkmal ist die Zahl der C=C-Doppelbindungen in der flüssigen, aus Monomeren bestehenden Lackphase. Mit durch UV-Strahlung aktivierten Photoinitiatoren werden die in der flüssigen Lackphase vorhandenen C=C-Doppelbindungen gebrochen und eine Polymerisationsreaktion in Gang gesetzt. Durch diese Polymerisation werden die einzelnen Monomere zu langkettigen Polymeren verknüpft. Während dieser durch UV-Bestrahlung ausgelösten Vernetzung verfestigt der Lack zunehmend, bis er nahezu vollständig ausgehärtet ist. In einem nahezu vollständig ausgehärteten Lack sollten damit ein Großteil der Monomere mit C=C-Doppelbindungen gebrochen und zu langkettigen Polymeren vernetzt sein. Damit bietet die Messung von in der untersuchten Lackschicht vorhanden C=C-Doppelbindung eine Grundlage für die im Projekt geplante Online-Messung der Vernetzung in industriellen Trocknungs- bzw. Vernetzungsprozessen.

Aufgrund der Vernetzung und der damit verbundenen Absorptionseigenschaften ändert sich die Intensität des transflektierten/reflektierten/gestreuten Lichts. Änderungen der Absorptionseigenschaften können gemessen werden.

Der Detektorkopf, der auch als Curing-Online-Sensor-Kopf bezeichnet wird, wird in einer sogenannten Curing-Online-Messeinrichtung verwendet, mit der das vorgestellte Transflexionsverfahren ausgeführt wird.

Es wird weiterhin in Verbindung mit dem Detektorkopf ein bspw. laserbasiertes Transflexionsverfahren vorgestellt, das eine kontinuierliche quantitative Messung der Vernetzung von UV- und thermisch härtenden Farben, Lacken, Klebstoffen und Silikonen direkt im industriellen Fertigungsprozess durchführt und damit eine Online-Kontrolle und direkte Steuerung bzw. Regelung von vernetzungsrelevanten Parametern im Produktionsprozess ermöglicht. Das Transflexionsverfahren arbeitet dabei berührungslos, so dass die zu prüfenden, berührungslos empfindlichen Schichten nicht durch die Messung beschädigt werden. Die Messungen können in Echtzeit mit einer Abtastrate von < 1 ms erfolgen, damit das auf dem Transflexionsverfahren basierende Curing-Online-Sensorsystem ohne Reduzierung der Taktrate in industrielle Fertigungsprozess integriert werden kann. Aus der Messung der Vernetzung können weitere spezifische Kenngrö-βen zur Charakterisierung von Farb- und Lackoberflächen bzw. -schichten, wie bspw. Härte, Kratzfestigkeit, Haftung, chemische Beständigkeit usw., im laufenden Produktionsprozess aus den Messsignalen abgeleitet und mit hinterlegten Qualitätsmerkmalen verglichen werden.

Somit gelingt es, durch Einsatz von Online-Messverfahren zusätzliche qualitätsrelevante Oberflächen bzw. Vernetzungsparameter von UV- und thermisch härtbaren Farben, Lacken, Klebstoffen oder Silikonen zu bestimmen.

Weiterhin kann eine applikationsspezifische Anpassung sowie die daten- und störungstechnische Integration des Curing-Online-Sensors in verschiedenen industriellen Anwendungen vorgenommen werden. Der Detektorkopf kann für den Einsatz in der Drucktechnik, in unterschiedlichen Automotive-Anwendungen (UV- und thermisch härtende Lacksysteme) sowie für die industrielle Fertigung von Kontaktlinsen entwickelt und in geeigneten Feldversuchsumgebungen verifiziert werden.

Es ist festzuhalten, dass mit dem Detektorkopf u.a. ein berührungslos messendes optisches Verfahren für die kontinuierliche zeitaufgelöste Online-Kontrolle der Vernetzung von Lacken, Farben, Klebstoffen, Silikonwerkstoffen usw. für industrielle Anwendungen zur Verfügung steht. Dabei können bspw. industrielle Druck- und Lackierprozesse wesentlich schneller und mit deutlich reduziertem Ausschuss angefahren und ausgeführt werden. Weiter wird die Reproduzierbarkeit von Lackier- und Trocknungsprozessen erhöht, die von veränderlichen Umgebungsbedingungen, wie bspw. Alter der UV-Strahler, schwankenden Lack- oder Farbeigenschaften usw., abhängt. Ebenso ermöglicht die Online-Überwachung eine Reduzierung von Energie und Materialverbrauch von mehr als 10 % sowie eine gezielte Vorgabe, Kontrolle und Reproduktion von Eigenschaften, wie bspw. Vernetzungsgrad, Oberflächenhärte oder Haftung der Farben bzw. Lacke am Untergrund.

Der vorgestellte Detektorkopf stellt somit, zumindest in einigen der Ausführungen, ein optisches Detektionsmodul zur Transflexionsmessung dar, das frei von elektrischen Bauteilen und damit unempfindlich gegenüber Umwelteinflüssen ist. Weiterhin ist dieser abstandsunempfindlich, insbesondere bei mindestens zwei Wellenlängen (Referenzierung), robust, kompakt und ermöglicht einen beliebig langen Kommunikationsabstand zwischen Detektorkopf und Kontrolleinheit und eine effiziente Lichtausbeute beim Detektieren. Zudem kann es konfokal, symmetrisch, günstig, einfach in der Herstellung und justagefreundlich sein.

Mit dem Detektorkopf ist es möglich, bei der Transflexion in der Probe erzeugtes Streulicht quantitativ und dynamisch zu messen.

Es wird somit ein optischer Detektorkopf beschrieben, der in Ausgestaltung eine externe Faser gekoppelte Lichtquelle, bspw. einem Diodenlaser, Faserlaser oder einem sonstigen mit der Wellenlänge im UV, VIS, MIR oder IR befindlichen Laser, Lichtfasern, Singlemodefaser (SM) oder Multimodefaser (MM), und Kollimatoren zur Einkopplung des Lichts in den Detektorkopf, einen Lochspiegel zur Trennung von Signalen und (Oberflächen-) Reflexion, einen zu einer Probe gewandten optischen Fenster mit oder ohne AR-Coating sowie Lichtfasern, SM oder MM, und Kollimatoren zur Rückführung des als Signal genutzten Streulichts der Transflexion oder Streuung zu einem außerhalb des Detektorkopfs befindlichen Photodetektor umfasst. Außer der Laserlichtquelle, dem Photodetektor und den Lichtfasern sind diese optischen Komponenten in einem handgroßen frei manipulierbaren Gehäuse untergebracht. Eine Kontrolleinheit ist extern zusammen mit Lichtquelle und Photodetektor in einem separaten Gehäuse untergebracht und über die optischen Fasern mit dem Detektorkopf flexibel verbunden.

Auf die bereits angesprochenen Vorteile, die zumindest in einigen der Ausführungen vorliegen, wird nachfolgend im einzelnen eingegangen:

Der Detektorkopf ist insbesondere frei von elektronischen Bauteilen, wie bspw. einer Photodiode zur Detektion des Lichts und Photodiodenverstärkern, die eine elektrische Versorgung benötigen. Somit ist der Detektorkopf rein optisch. Weiterhin ist ein robuster Aufbau möglich. Es kann ein massives Aluminiumgehäuse verwendet werden, bei dem keine Temperaturprobleme vorliegen, d.h. es ist keine Kühlung erforderlich, da die Wärme abgebende Lichtquelle und die temperaturempfindliche Photodiode außerhalb liegen. Der Kopf ist weiterhin erschütterungsunempfindlich. Es liegt ein starrer opto-mechanischer Aufbau ohne bewegliche Teile vor. Es ist ebenfalls ein kompakter Aufbau möglich.

Aufgrund des beliebig langen Kommunikationsabstands zwischen Kopf und Kontrolleinheit ergeben sich vielfältige Anwendungen. Weiterhin wird eine effiziente Lichtausbeute ermöglicht, hierzu dient insbesondere der bspw. vorgesehene spezielle Lochspiegel als Streulichtfilter/Oberflächenreflexfilter. Darüber hinaus ist der Detektorkopf nahezu abstandsunempfindlich, wenn es sich um ein relatives Messverfahren mit Signal- und Referenzquelle bzw. -laser handelt. Hierbei ist die absolute Intensität irrelevant.

Es ist des weiteren ein konfokales Messverfahren möglich, d.h. der Hin- und der Rückweg des Lichtpfads befinden sich auf der gleichen Achse. Das zur Detektion genutzte Licht stammt exakt aus der Region, die mit der Lichtquelle bestrahlt wird. Durch die überwiegende Verwendung von Standardkomponenten ist ein kostengünstiger Aufbau möglich. Dies wird durch die einfache Herstellung unterstützt. Diese umfasst lediglich ein Zusammensetzen von mechanischen und optischen Bauteilen, eine komplexe Montage ist nicht erforderlich. Es ist hingegen nur eine Einmaljustage erforderlich, im Betrieb ist keine Nachjustage mehr erforderlich.

Der vorgestellte Detektorkopf kann auch zur Messung von Oberflächeneigenschaften und Volumeneigenschaften, geometrisch und spektral, verwendet werden. Damit erweitert sich die Anwendung auf zahlreiche weitere Felder, wie bspw.:
Detektion der Anreicherung oder Abreicherung von (Makro-) Molekülen, z.B. in der molekularen Diagnostik,
Messung von Fluoreszenz oder Phosphoreszenz,
Oberflächenkontrolle von Gegenständen (Politur/Spiegel, Gleichmäßigkeit, Schäden, Macken, Verschmutzung, ...),
Oberflächenformabtastung von dreidimensionalen Gegenständen (Stanzung, Prägung, Schweißnahtoberfläche, ...),
Qualitätskontrolle,
Prozesskontrolle.
Grundsätzlich sind der Detektorkopf und das vorgestellte Verfahren anwendbar, wenn Streuverhalten/Fluorezenz/Phosphoreszenz/Absorption/Transmission eines Gegenstands auf eine interessierende Eigenschaft schließen lässt.

Der vorgestellte Detektorkopf kann mit einen oder mehreren zusätzlichen Quellen, bspw. mit zwei oder mehreren zusätzlichen fasergekoppelten Laserlichtquellen, unterschiedlicher Wellenlänge ausgestattet werden. Grundsätzlich ist eine einzige Quelle ausreichend. Damit lassen sich Informationen über das Absorptionsspektrum oder Streuverhalten der Probe gewinnen. Dadurch ergibt sich auch die Möglichkeit, zusätzlich zur quantitativen und qualitativen Veränderung der Probe, deren chemischen Eigenschaften und deren Änderung zu detektieren, bspw. die qualitative Erkennung von Molekülen in der molekularen Diagnostik.

Nachstehend sind einige Ausführungsbeispiele mit Anwendungsmöglichkeiten genannt:
1. Eine Laserlichtquelle: Messen der Intensität, bspw. des Streulichts, relativ zur vorangehenden Messung oder zur Masterprobe bzw. dynamisch.
2. Zwei oder mehrere Laser: Durch Bilden der Quotienten der Intensitäten ist die Messung spektral relativ. Eine Veränderung einer Wellenlänge gegenüber einer weiteren Wellenlänge wird detektiert.
3. Mindestens drei Laser: Bei zweien der mindestens drei Wellenlängen kann ein fiktiver spektraler Referenzpunkt berechnet werden, der relativ zur Intensität der dritten Wellenlänge steht, womit eine absolute Messung ermöglicht wird.
4. Unter Fixierung aller Intensität beeinflussenden Parameter kann absolut gemessen werden.
5. Durch inkrementelles oder alternierendes Messen von Substrat mit Probe und Substrat ohne Probe können Schwankungen im Messsystem ausgeglichen werden.

In einer weiteren Ausführung sind drei intensitätsmodulierte Laserlichtquellen vorgesehen, deren Detektion über eine Photodiode, bspw. eine InGaAs-Photodiode und Signaltrennung mit einer LockIn-Einheit erfolgt. Man kann jedoch auch optisch trennen.

Eine weitere Ausführung des Detektorkopfs verwendet einen optischen Filter zwischen der Linse und dem Kollimator, d.h. der Auskopplung des Messstrahls. Diese Ausführungsform kann zur Detektion von optisch angeregter Fluoreszenz oder Phosphoreszenz verwendet werden. In diesem Fall kann anstelle eines Lochspiegels auch ein Strahlteiler verwendet werden.

Es wird weiterhin ein Verfahren beschrieben, das die Messung von transflexionsbedingtem oder auf andere Weise entstandenem Streulicht entsprechender Proben ermöglicht.

Ferner wird ein Verfahren zur relativen Messung der Lichtintensität, mit dessen Hilfe die Signalauswertung unabhängig von den absoluten Lichtintensitätswerten erfolgen kann, beschrieben. Die Erfindung umfasst ferner Ausführungsformen und Verfahren, die neben der Messung von Streulichteigenschaften auch die Messung von spektralen Eigenschaften einer Probe erlauben.

Der Detektorkopf wurde zur Verfolgung und Messung des Aushärteprozesses von Lacken entwickelt, nach dem Prinzip der Transflexionsmessung des Streulichts. Hierbei wird ausgenutzt, dass die Intensität des Streulichts sich mit der Änderung der Zahl der vernetzten Polymermoleküle ändert. Die Bauweise des Detektorkopfes erlaubt den Einsatz des Verfahrens im Umfeld von industrieller Produktion und Qualitätssicherung oder in der Prozessüberwachung.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Figur 1: verdeutlicht in einer schematischen Darstellung das Transflexionsprinzip.
- Figur 2: zeigt eine Ausführungsform des beschriebenen Detektorkopfs in einer vereinfachten Darstellung.
- Figur 3: verdeutlicht eine Ausführung des angewandte Messprinzips.
- Figur 4: verdeutlicht ein alternatives Messprinzip mit einem Strahlteiler.
- Figur 5: zeigt die Messung bei einem alternativen Aufbau.
- Figur 6: zeigt eine weitere Ausführung des beschriebenen Detektorkopfs.
- Figur 7: zeigt einen Lochspiegel in einer Draufsicht.
- Figur 8: zeigt einen Lochspiegel in einer perspektivischen Ansicht.
- Figur 9: zeigt eine Ausführung des Detektorkopfs in einer Gesamtansicht.

Die Erfindung ist anhand von Ausführungsformen in der Zeichnung schematisch dargestellt und wird nachfolgend unter Bezugnahme auf die Zeichnung ausführlich beschrieben.

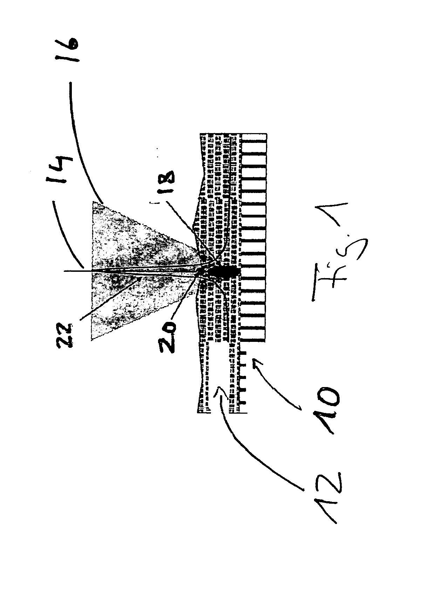

Figur 1 verdeutlicht das Transflexionsmessprinzip. Die Darstellung zeigt ein Substrat 10, auf dem eine Probe 12 als Oberflächenschicht aufgebracht ist. Die Probe 12 besteht bspw. aus einem transparenten, Makromoleküle enthaltenden Material, z.B. einem Acrylat, das auf dem Substrat 10, bspw. Glas, Kunststoff, Metall, aufgebracht ist. Licht 14 einer Laserquelle durchdringt die Probe 12, wird am Substrat 10 reflektiert oder gestreut und durchdringt die Probe 12 ein zweites Mal. Dies wird als Transflexion bezeichnet. Bei beiden Durchgängen findet eine Interaktion des Lichts mit den Makromolekülen statt, bspw. Streuung, Absorption. Aus der Intensität des transflektierten Lichts 16 (Absorptionssignal) lassen sich Rückschlüsse auf deren Zusammensetzung (Absorptionsbanden) und relative Menge (Streuquerschnitt) ziehen. Es lässt sich damit bspw. der Bildungsprozess von Makromolekülen (Polymerisation) verfolgen. Mit Bezugsziffer 18 ist diffuses reflektiertes Laserlicht bezeichnet. Mit Bezugsziffer 20 ist der Oberflächenreflex aufgrund des Luft-Proben-Durchgangs bezeichnet. Bezugsziffer 22 veranschaulicht die Lichtintensitätsverteilung.

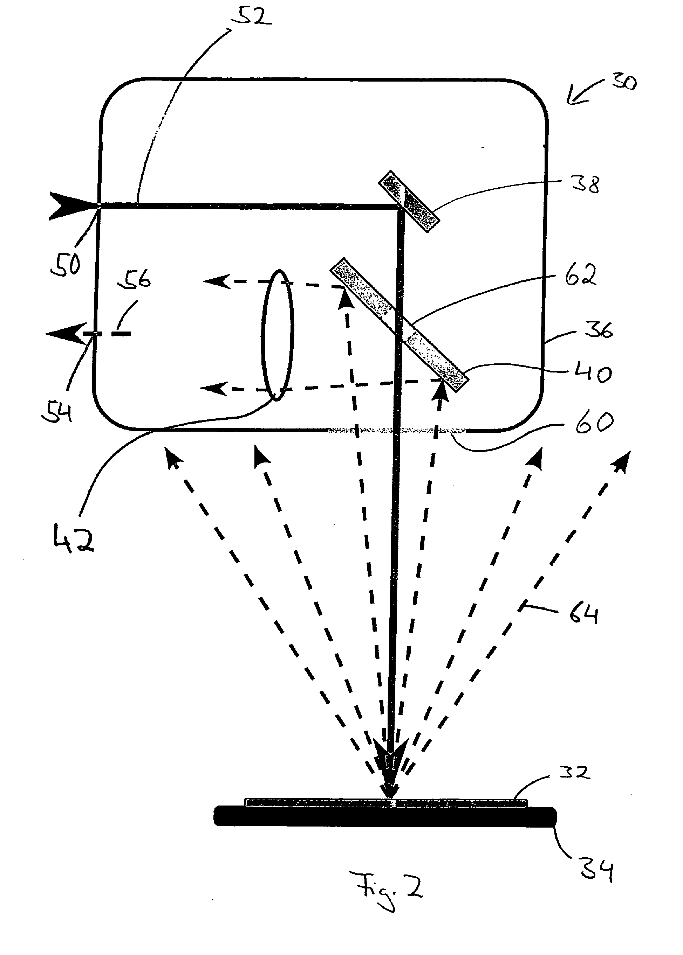

Figur 2 zeigt stark vereinfacht einen Detektorkopf 30, der zur Untersuchung einer Probe 32, die auf einem Substrat 34 aufgebracht ist, vorgesehen ist. Der Detektorkopf 30 umfasst ein Gehäuse 36, in dem ein Spiegel 38, ein Streulichtfilter 40, in diesem Fall ein Lochspiegel, und eine Linse 42 vorgesehen sind. Der Detektorkopf 30 umfasst somit nur optische und ggf. mechanische Komponenten, ist somit rein optisch bzw. opto-mechanisch aufgebaut.

Weiterhin weist das Gehäuse 36 einen ersten Koppler 50 zum Einkoppeln eines Anregungsstrahls 52 und einen zweiten Koppler 54 zum Auskoppeln eines Messstrahls 56, in diesem Fall Laserlicht, auf. Außerdem ist ein Fenster 60 zum Austreten des durch den Spiegel 38 umgeleiteten und durch ein Loch 62 in dem Streulichtfilter 40 getretenen Anregungsstrahls vorgesehen. Von der Probe 32 abgegebenes Streulicht 64 wird als Transflexionsstrahl bzw. -licht bezeichnet. Dieses gelangt wiederum durch das Fenster 60. Anstelle des Fensters 60 kann auch eine Linse vorgesehen sein. In diesem Fall kann die Linse 42 entfallen.

Durch das Loch 62 in dem Streulichtfilter 40 wird der Anregungsstrahl 52 vollständig durchgelassen. Das gestreute Transreflexionslicht wird von der Spiegelfläche des Streulichtfilters 40 in Richtung des Durchlasses 54 nahezu vollständig, typischerweise 99%, reflektiert, während die von der Probe 32 kommende, gerichtete Reflexion (Oberflächenreflexion 20) hoher Intensität durch das Loch 62 in Richtung der Lichtquelle zurückgeführt wird und damit wunschgemäß nicht in den Detektionskanal, in dem der Messstrahl 56 verläuft, gelangt. Anschließend wird das reflektierte Streulicht einer Detektionsoptik zugeführt. Der Detektorkopf 30 stellt somit eine Kombination aus einem Oberflächenreflexfilter und einem selektiven Streulichtreflektor dar.

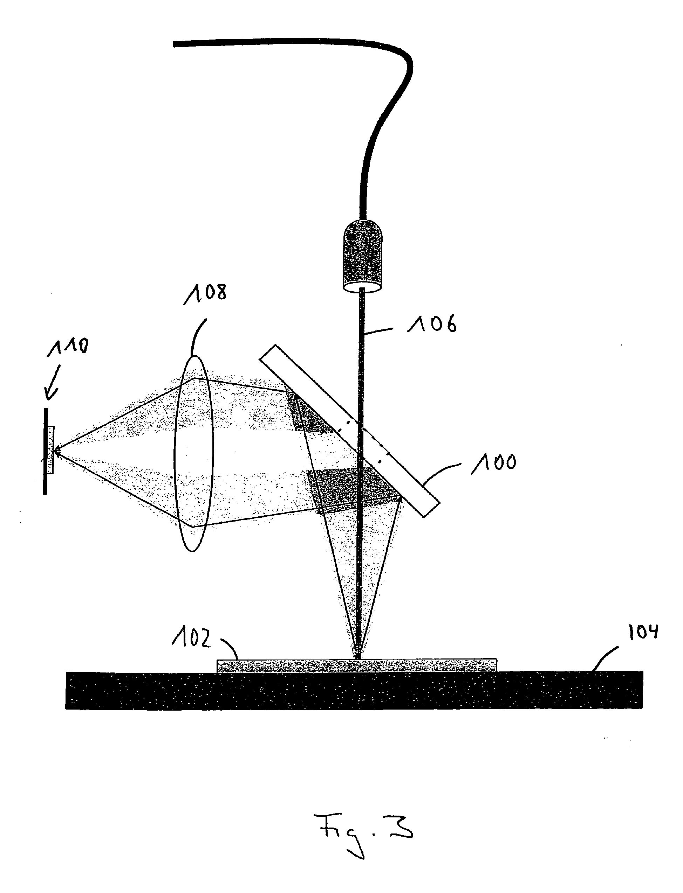

In Figur 3 ist das Messprinzip mit einem Lochspiegel 100 nochmals verdeutlicht. Die Darstellung zeigt eine Probe 102, ein Substrat 104, Laserlicht 106, eine Linse 108 und einen Detektor 110.

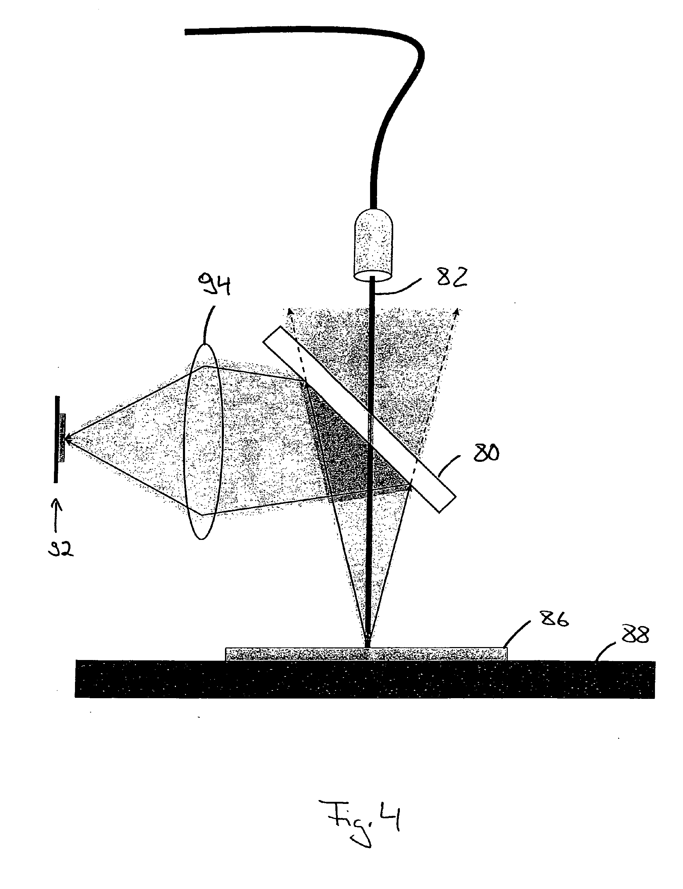

Figur 4 verdeutlicht ein alternatives Messprinzip, das mit dem beschriebenen Detektorkopf durchzuführen ist. Bei der gezeigten Ausführung ist die Verwendung eines Strahlteilers 80 unter z.B. 45° zusammen mit einem Laserstrahl 82 von Bedeutung. Der Laserstrahl 82 wird durch den Strahlteiler 80 auf eine Probe 86, die auf einem Substrat 88 aufgebracht ist, projiziert. Das auf der Probe 86 entstandene Signal wird mit dem Strahlteiler auf einen Detektor 92 mit einer Linse 94 projiziert.

Zu beachten ist, dass das Substrat 88 das Laserlicht 82 zusätzlich reflektiert bzw. streut. Die Probe 86 kann hierbei auch zur Streulichtdetektion das Substrat 88 darstellen.

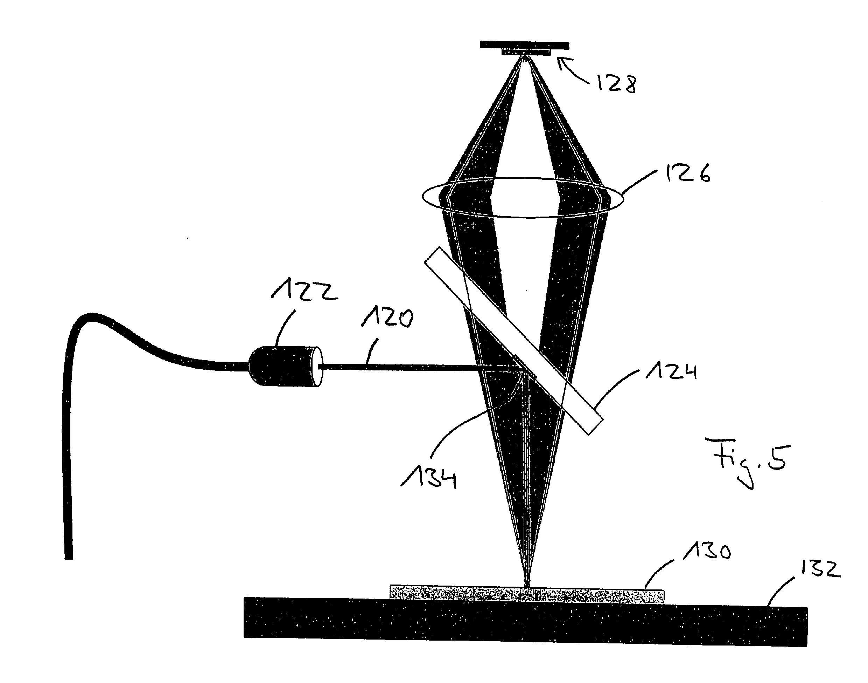

In Figur 5 ist ein alternativer Aufbau, der zur Messung dient und in Verbindung mit dem vorgestellten Detektorkopf zur Anwendung kommen kann, wiedergegeben. Die Darstellung zeigt Laserlicht 120 aus einer Quelle 122, ein Streulichtfilter 124, eine Linse 126, einen Detektor 128, eine Probe 130 und ein Substrat 132.

Das Streulichtfilter 124 umfasst einen mittig angeordneten Bereich 134, der reflektiert. Hierzu ist bspw. ein Spiegel geeignet. Die gesamte Region um diesen reflektierenden Bereich transmittiert das von der Probe 130 kommende Licht nahezu vollständig. So wird nur das auf direktem Wege von der Probe 130 reflektierte Licht durch den reflektierenden Bereich 134 zurück zur Quelle 122 zurückgeleitet. Das restliche Licht transmittiert durch das Streulichtfilter 124, wird von der Linse 126 gesammelt und auf den Detektor 128 projiziert.

Es kann selbstverständlich als Streulichtfilter 124 nur der reflektierende Bereich 134 bzw. ein Spiegel verwendet werden. Dieses Streulichtfilter 124 hat somit einen im Vergleich zur Ausführung in der Figur 3 verwendeten Lochspiegel 100 invertierten Aufbau.

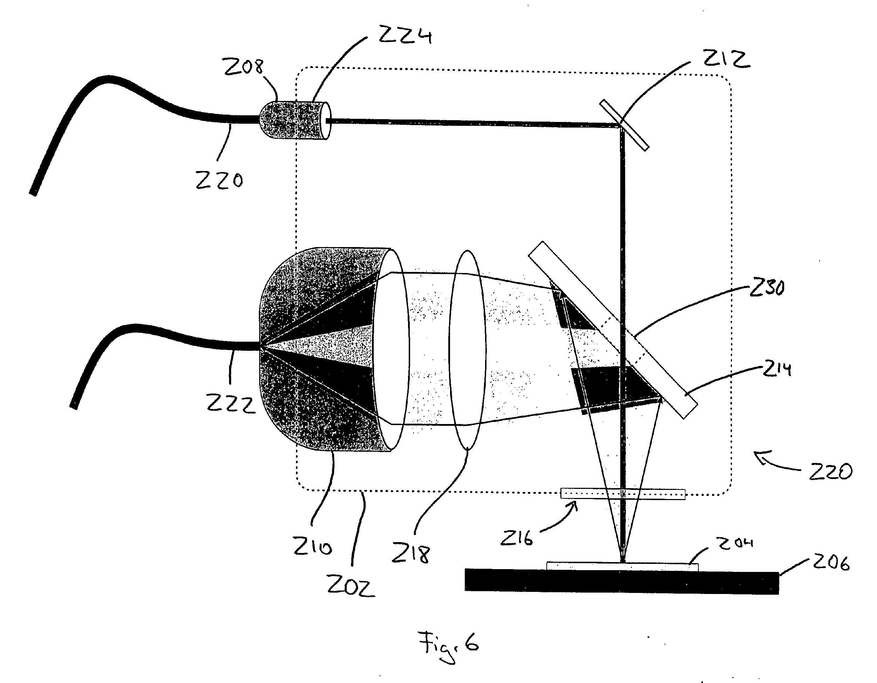

Figur 6 zeigt eine mögliche Ausführung des Detektorkopfs, der insgesamt mit der Bezugsziffer 200 bezeichnet ist. Dieser weist ein Aluminiumgehäuse 202 zum Halten der Komponenten auf und dient zur Untersuchung einer Probe 204, die auf einem Substrat 206 aufgebracht ist.

In dem Detektorkopf 200 sind ein erster Kollimator 208 und ein zweiter Kollimator 210 vorgesehen. Weiterhin ist ein Spiegel 212, ein Lochspiegel 214, ein Schutzfenster 216 und eine Kollimatorlinse 218 bereitgestellt. Die Darstellung zeigt weiterhin eine Singlemodefaser 220 und eine Detektorfaser 222.

Die besondere Aufgabe des Lochspiegels 214 besteht darin, das zu messende Streulicht von dem üblicherweise intensiveren Oberflächenreflexionslicht zu trennen. Der Lochspiegel 214 dient folglich als selektiver Streulichtfilter.

Die Singlemodefaser 220 mit eingekoppelten Laserlicht, das Anregungslicht, wird zum Detektorkopf 200 geführt und an den ersten Kollimator 208 angeschlossen. Der erste Kollimator 208 kollimiert das Laserlicht mit einer Linse 224 und es entsteht ein kollimierter Freistrahllaser.

Der Laserstrahl wird an dem Spiegel 212 umgelenkt, um eine bessere Handhabung des Detektorkopfs 200 zu erreichen. Damit sind die Anschlüsse beider Fasern 220 und 222 auf einer Seite und im rechten Winkel zur Probe 204. Das Laserlicht gelangt durch ein Loch 230 im Lochspiegel 214, durch das Schutzfenster 216 und auf die Probe 204. Dort findet die Transflexion und/oder Streuung des Anregungslichts statt.

Das gestreute oder transflektierte Licht, das sogenannte Signallicht, geht durch das Schutzfenster 216 auf den Lochspiegel 214 und wird auf die Kollimatorlinse 218 reflektiert. Die Kollimatorlinse 218 dient dazu, das gestreute Licht zu kollimieren, damit der zweite Kollimator 210 auf das Faserende der Detektorfaser 222 fokussiert und einkoppelt. Das gesammelte Licht wird in der Detektorfaser 222 zu einer Photodiode geführt, die sich außerhalb des Detektorkopfs 200 befindet. Eine Laserlichtquelle, die Photodiode oder alternative Detektoren sind zusammen mit einer Kontrolleinheit typischerweise in einem separaten Gehäuse untergebracht.

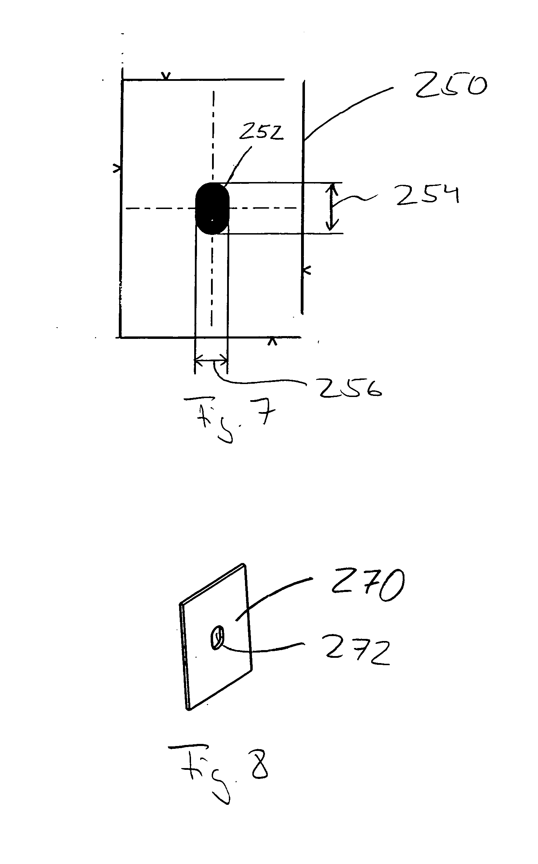

Figur 7 zeigt eine Ausführung eines Lochspiegels, der insgesamt mit der Bezugsziffer 250 bezeichnet ist. Bei diesem Lochspiegel 250, der über eine reflektierende Oberfläche verfügt, ist mittig ein Langloch 252 vorgesehen. Zu erkennen ist, dass die Abmessung des Langlochs 252 in vertikaler Richtung (Doppelpfeil 254) sich von derjenigen in horizontaler Richtung (Doppelpfeil 256) unterscheidet.

Grundsätzlich ist es möglich, die Form des in dem verwendeten Lochspiegel ausgebildeten Lochs anforderungsgerecht, grundsätzlich aber beliebig zu wählen.

Figur 8 zeigt in einer perspektivischen Ansicht eine Ausführung eines Lochspiegels 270, der über ein Langloch 272 verfügt. Dieser gezeigte Lochspiegel 270 mit dem Langloch 272 kann selbstverständlich in Verbindung mit hierin gezeigten Ausführungen des Detektorkopfs verwendet werden.

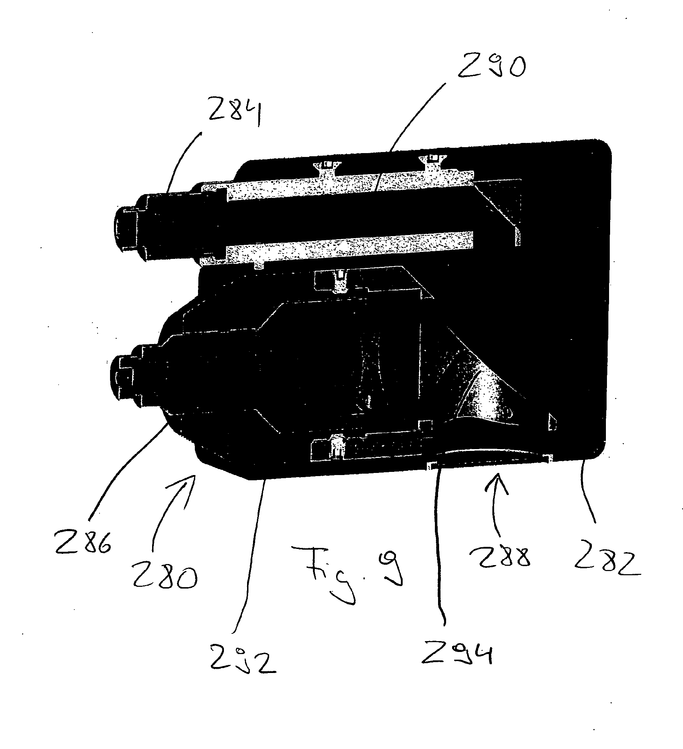

Figur 9 zeigt in einer Gesamtansicht einen Detektorkopf 280 mit einem Gehäuse 282, der robust und kompakt ausgebildet ist. Die Darstellung zeigt einen ersten Kollimator 284, einen zweiten Kollimator 286 und ein Messfenster 288.

Von dem ersten Kollimator 284 führt ein erster Strahlenkanal 290 weg, hin zu dem zweiten Kollimator 286 führt ein zweiter Strahlengang 292. Die beiden Strahlengänge 290 und 292 sind parallel zueinander ausgerichtet. Weiterhin ist ein Lochspiegel 294 dargestellt.

## Patentansprüche

1. Detektorkopf mit einem Gehäuse, in dem ein Strahlteiler angeordnet ist, wobei zusätzlich ein erster Anschluss zum Einkoppeln einer Faser für einen Anregungsstrahl und ein zweiter Anschluss zum Auskoppeln in eine Faser für einen Messstrahl vorgesehen ist, und bei dem das Gehäuse ein optisches Medium zum Durchleiten eines Anregungsstrahls und zum Rückleiten von Licht, das räumlich selektiv von dem Strahlteiler zu erfassen und auf den zweiten Anschluss zu leiten ist, aufweist.

2. Detektorkopf nach Anspruch 1, bei dem der erste Anschluss als Koppler ausgebildet ist.

3. Detektorkopf nach Anspruch 1, bei dem der zweite Anschluss als Koppler ausgebildet ist.

4. Detektorkopf nach einem der Ansprüche 1 bis 3, bei dem ein erster Kollimator zum Einkoppeln des Anregungsstrahls vorgesehen ist.

5. Detektorkopf nach einem der Ansprüche 1 bis 4, bei dem ein zweiter Kollimator zum Auskoppeln des Messstrahls vorgesehen ist.

6. Detektorkopf nach einem der Ansprüche 1 bis 5, bei dem als Strahlteiler ein Streulichtfilter verwendet ist.

7. Detektorkopf nach Anspruch 6, bei dem als Streulichtfilter ein Lochspiegel verwendet ist.

8. Detektorkopf nach Anspruch 6, bei dem als Streulichtfilter ein Spiegel verwendet ist, der von einer transmittierenden Region umgeben ist.

9. Detektorkopf nach einem der Ansprüche 1 bis 8, bei dem als optisches Medium ein Fenster dient.

10. Detektorkopf Anspruch 9, bei dem das Fenster als Schutzfenster ausgebildet ist.

11. Detektorkopf nach einem der Ansprüche 1 bis 10, der für ein Transflexionsverfahren ausgebildet ist.

12. Detektorkopf nach einem der Ansprüche 1 bis 11, bei dem zusätzlich ein Spiegel zum Umlenken des Anregungsstrahls vorgesehen ist.

13. Detektorkopf nach einem der Ansprüche 1 bis 12, bei dem zusätzlich eine Linse zum Kollimieren des Messstrahls vor dem Auskoppeln vorgesehen ist.

14. Messeinrichtung zum berührungslosen Bestimmen einer Eigenschaft eines Gegenstands mit einem Detektorkopf nach einem der Ansprüche 1 bis 13.

15. Messeinrichtung nach Anspruch 14, die zur Durchführung eines Lock-in-Verfahrens ausgebildet ist.
